# EUROPEAN PATENT SPECIFICATION

(11) **EP 3 162 528 B1**
(45) Date of publication and mention of the grant of the patent: **18.09.2019**
(21) Application number: 16193003.7
(22) Date of filing: 10.10.2016
(51) Int. Cl.: B29C 45/17

(54) **INJECTION MOLDING MACHINE**
SPRITZGIESSMASCHINE
MACHINE DE MOULAGE À INJECTION

(30) Priority: 30.10.2015 JP 2015215191
(43) Date of publication of application: 03.05.2017
(73) Proprietor: SUMITOMO HEAVY INDUSTRIES, LTD., Tokyo 141-6025 (JP)
(72) Inventor: ISHII, Yoshihisa, Chiba-shi, Chiba 263-0001 (JP); TOKUSHIGE, Nobuhiko, Chiba-shi, Chiba 263-0001 (JP)
(74) Representative: Louis Pöhlau Lohrentz

(56) References cited:
- DE-C1- 4 236 147
- JP-A- H07 232 363
- JP-A- H07 314 514
- JP-A- 2000 263 617
- JP-A- 2001 191 381
- JP-A- 2008 272 872
- US-A- 5 391 070

## Description

### BACKGROUND OF THE INVENTION

### Field of the Invention

Certain embodiments of the present invention relate to an injection molding machine.

### Description of Related Art

An injection molding machine disclosed in Japanese Unexamined Patent Application Publication No. 2003-326574 includes one or multiple temperature sensors which are disposed in a mold clamping unit, and a control panel which displays a temperature detected by the temperature sensors on a screen on a controller.

Furthermore, various embodiments of injection molding machines in which a display is movable are disclosed in the prior art documents US 5 391 070, DE 42 36 147 C1, JP2001191381, JP2000263617, JPH07232363, and JP2008272872.

In the related art, if the control panel and peripheral members thereof are collectively installed, workability with respect to the peripheral members deteriorates, and the installation position of the control panel is limited.

### SUMMARY OF THE INVENTION

The present invention is made in consideration of the above-described problems, and a main object thereof is to provide an injection molding machine in which a control panel and peripheral members thereof can be collectively installed and workability with respect to the peripheral members can be improved.

In order to achieve the above-described object, according to an aspect of the present invention, there is provided an injection molding machine, including: a control panel which is used in a control of injection molding; a peripheral member which is provided in the periphery of the control panel; and a support member which supports the control panel to be movable between a close position at which the control panel closes a path reaching the peripheral member when an operation with respect to the peripheral member is performed and an open position at which the control panel opens the path.

According to the aspect of the present invention, an injection molding machine is provided, in which the control panel and the peripheral members thereof can be collectively installed and workability with respect to the peripheral members can be improved.

### BRIEF DESCRIPTION OF THE DRAWINGS

Fig. 1 is a side view showing a state when mold opening of an injection molding machine according to an embodiment is completed.
Fig. 2 is a side view showing a state when a mold of the injection molding machine according to the embodiment is clamped.
Fig. 3 is a front view of the injection molding machine of Fig. 2, and is a front view when a control panel is positioned at a close position.
Fig. 4 is a front view when the control panel of Fig. 3 moves from the close position to an open position.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

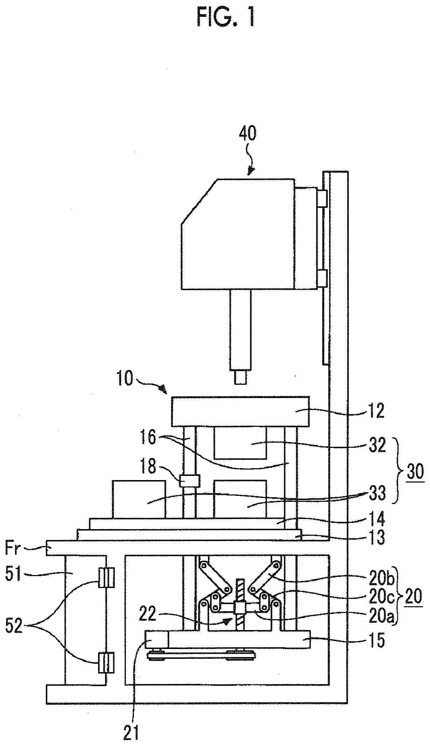

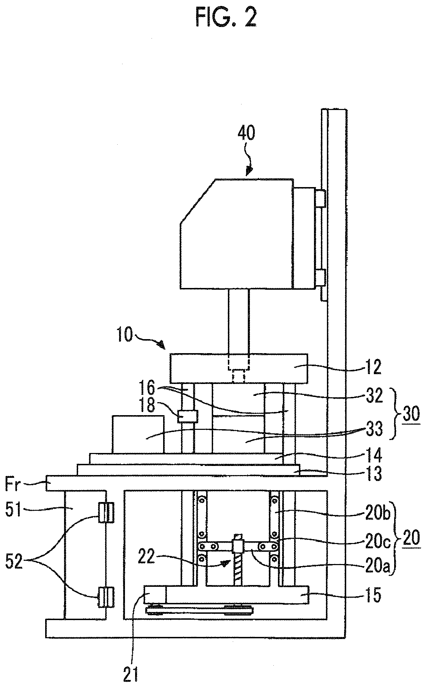

Fig. 1 is a side view showing a state when mold opening of an injection molding machine according to an embodiment is completed. Fig. 2 is a view showing a state when a mold of the injection molding machine according to the embodiment is clamped. As shown in Figs. 1 and 2, the injection molding machine includes a frame Fr, a mold clamping unit 10, and an injection unit 40.

The frame Fr supports the mold clamping unit 10 and the injection unit 40. In addition, the frame Fr may support at least one of the mold clamping unit 10 and the injection unit 40. A mold clamping unit frame supporting the mold clamping unit 10 and the injection unit frame supporting the injection unit 40 may be separately provided from each other.

The mold clamping unit 10 performs mold-closing, mold-clamping, and mold-opening of a mold unit 30. For example, the mold unit 30 includes an upper mold 32 and a lower mold 33. The mold clamping unit 10 includes an upper platen 12, a lower platen 13, a rotary table 14, a toggle support 15, a tie bar 16, a toggle mechanism 20, a mold clamping motor 21, and a movement conversion mechanism 22.

The upper platen 12 can be freely lifted and lowered above the lower platen 13. The upper mold 32 is attached to a surface (lower surface) of the upper platen 12 facing the lower platen 13.

The lower platen 13 is disposed below the upper platen 12 and is fixedto a frame Fr. The multiple lower molds 33 are attached to a surface (upper surface) of the lower platen 13 facing the upper platen 12 via the rotary table 14.

The rotary table 14 rotates by 180°, and moves between a position at which the lower mold 33 faces the upper mold 32 and a position at which a molding product is extracted. The position at which the molding product is extracted may be a preparation position at which an insert member is set to the lower mold 33.

In addition, the lower mold 33 of the present embodiment is attached to the lower platen 13 via the rotary table 14. However, the lower mold 33 may be directly attached to the lower platen 13. In addition, the number of the lower molds 33 is not limited to two, and may be one, or three or more.

The toggle support 15 can be freely lifted and lowered below the lower platen 13, and is connected to the upper platen 12. The upper platen 12 is lifted and lowered according to the lifting and lowering of the toggle support 15.

The tie bar 16 penetrates the lower platen 13, and connects the upper platen 12 and the toggle support 15. Multiple tie bars 16 may be used. Respective tie bars 16 are parallel to each other in a mold opening-closing direction, and extend according to a mold clamping force.

A mold clamping force detector 18 is provided on at least one tie bar 16. The mold clamping force detector 18 may be a strain gauge type detector, and detects the mold clamping force by detecting of strain of the tie bar 16.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16. In addition, the mold clamping force detector 18 may not be provided.

The toggle mechanism 20 is provided between the lower platen 13 and the toggle support 15, and lifts and lowers the toggle support 15 with respect to the lower platen 13. The toggle mechanism 20 includes a crosshead 20a, multiple links 20b and 20c, or the like. One link 20b is attached so as to be freely oscillated to the lower platen 13, and the other link 20c is attached so as to be freely oscillated to the toggle support 15. The links 20b and 20c are bendably/strechably connected by pins or the like.

The mold clamping motor 21 operates the toggle mechanism 20. The mold clamping motor 21 lifts and lowers the crosshead 20a so as to bend and stretch the multiple links 20b and 20c. Accordingly, the toggle support 15 and the upper platen 12 are lifted and lowered. The movement conversion mechanism 22 which converts rotational motion of the mold clamping motor 21 to linear motion of the crosshead 20a is provided between the mold clamping motor 21 and the crosshead 20a. For example, the movement conversion mechanism 22 is configured of a ball-screw mechanism or the like.

The operation of the mold clamping unit 10 is controlled by a controller. The controller is configured of a computer or the like. The controller controls a mold closing process, a mold clamping process, and a mold opening process.

In the mold closing process, by driving the mold clamping motor 21 and lowering the upper platen 12, the upper mold 32 comes into contact with the lower mold 33.

In the mold clamping process, a mold clamping force is generated by further driving the mold clamping motor 21. When the mold is clamped, a cavity space is formed between the upper mold 32 and the lower mold 33, and the cavity space is filled with a liquid molding material. The molding material filling the cavity space is solidified to obtain a molding product.

In the mold opening process, the upper mold 32 is separated from the lower mold 33 by driving the mold clamping motor 21 and lifting the upper platen 12.

The injection unit 40 is freely lifted and lowered along a guide which is formed on the frame Fr. The injection unit 40 is touched to the mold unit 30, and the inside of the mold unit 30 is filled with a molding material. Similarly to the operation of the mold clamping unit 10, the operation of the injection unit 40 is controlled by the controller.

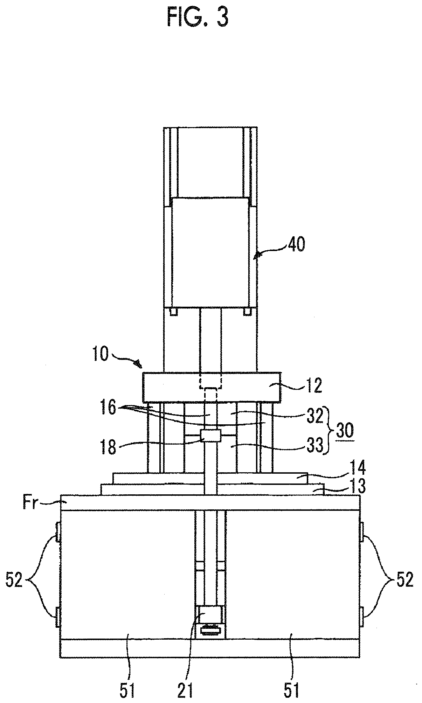

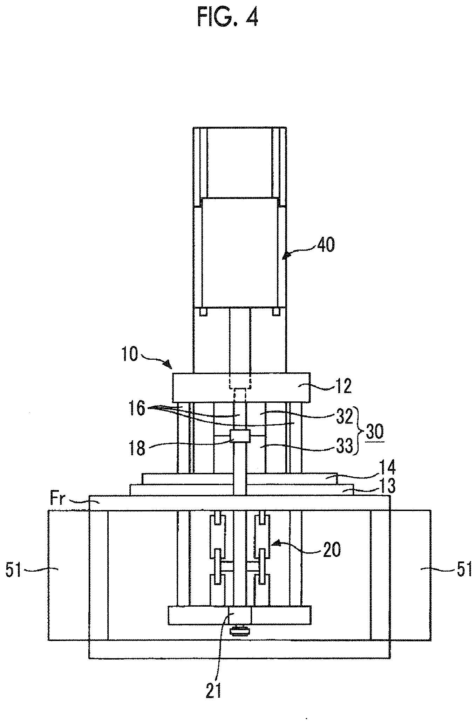

Fig. 3 is a front view of the injection molding machine of Fig. 2, and is a front view when a control panel is positioned at a close position. Fig. 4 is a front view when the control panel of Fig. 3 moves from the close position to an open position. As shown in Figs. 3 and 4 or the like, the injection molding machine includes control panels 51, and support members 52 (refer to Figs. 1 to 3).

The control panels 51 configure the controller. Each of the control panels 51 is used to control injection molding. For example, the control panel 51 is used to control various devices such as the mold clamping unit 10, the injection unit 40, or a temperature adjust unit of the mold unit 30.

The control panel 51 is provided so as to be separated from an operation panel including a display device which displays an operation screen or the like, and for example, is accommodated inside a room formed by the frame Fr. The control panel 51 controls the injection molding based on setting input by the operation panel.

The control panel 51 includes a housing, and electric devices which are accommodated inside the housing. The electric devices includes a processing device such as a Central Processing Unit (CPU) and for example a storage device, a detector, a switch, a relay, a converter, an inverter, a timer, a counter, a fan, or the like.

The support member 52 supports the control panel 51 to be movable between a close position and an open position. For example, the support member 52 is a hinge, and supports the control panel 51 to be pivotable between the close position and the open position.

Here, the close position is a position at which a worker, a working machine, or the like closes a path reaching the peripheral members when an operation is performed on the peripheral members of the control panel 51. Meanwhile, the open position is a position at which the path is open. The peripheral members of the control panel 51 are members which are provided in the periphery of the control panel 51. For example, the peripheral members of the control panel 51 include components of the mold clamping unit 10.

When the control panel 51 is fixed at the close position, a worker or a working machine does not easily reach the peripheral member positioned on the side opposite to the worker or the working machine based on the control panel 51, and operations such as a maintenance operation with respect to the peripheral member is not easily performed.

Before the operation with respect to the peripheral member is performed, the control panel 51 moves from the close position to the open position and is fixed at the open position. Accordingly, the operation with respect to the peripheral member can be performed. If this operation ends, the control panel 51 moves from the open position to the close position, and is fixed at the close position again.

That is, when an operation with respect to the peripheral member is not performed, the control panel 51 is fixed at the close position. Meanwhile, when the operation with respect to the peripheral member is performed, the control panel 51 is fixed at the open position. Moreover, the control panel 51 may be fixed at an intermediate position between the close position and the open position.

The movement of the control panel 51 may be manually performed, may be performed by a drive device, and may be performed by both. For example, as the drive device, a motor, a cylinder, or the like is used.

In addition, the support member 52 is not limited to the hinge, and the movement of the control panel 51 is not limited to the pivoting. For example, as the support member 52, a link, apin, a slider, a guide, a cam, agear, or the like maybe singularly used, or combination thereof may be used. The movement of the control panel 51 may be any one of the pivoting, a linear movement, and a curved movement, and the multiple movements thereof may be combined.

According to this embodiment, the support member 52 supports the control panel 51 to be movable between the close position and the open position. Accordingly, the control panel 51 and the peripheral members thereof can be collectively installed, and workability of the control panel 51 with respect to the peripheral members can be improved.

When the control panel 51 is positioned at the close position, the control panel 51 is accommodated inside the room formed by the frame Fr along with the peripheral members of the control panel 51. The control panel 51 and the peripheral members thereof can be collectively installed inside the narrow room. Since the control panel 51 can be moved from the close position to the open position, the workability with respect to the peripheral members can be secured.

When the control panel 51 is positioned at the close position, the room formed by the frame Fr may be covered with the panel or the like, and the inside of the room may be invisible from the outside . Since the control panel 51 or the peripheral members thereof is invisible from the outside, design properties of the injection molding machine are improved. The panel may be removed if necessary.

When the control panel 51 is positioned at the open position, and the control panel 51 may protrude toward the outside of the room formed by the frame Fr. Workability of the control panel 51 with respect to the peripheral members can be further improved. In addition, if the operation of the control panel 51 with respect to the peripheral members can be performed, when the control panel 51 is positioned at the open position, the control panel 51 may not protrude toward the outside of the room formed by the frame Fr.

Since the frame Fr supports the mold clamping unit 10, the peripheral member of the control panel 51 may be the component of the mold clamping unit 10. Moreover, since the frame Fr supports the injection unit 40, the peripheral member of the control panel 51 may be the component of the injection unit 40.

Hereinbefore, the embodiment of the injection molding machine is described. However, the present invention is not limited to the above-described embodiment, or the like. Various modifications and improvement may be applied to the present invention within the scope which does not depart from the gist of the present invention described in claims.

For example, the mold clamping unit 10 of the embodiment is a vertical type mold clamping unit in which the mold opening-closing direction is the vertical direction. However, the mold clamping unit 10 may be a horizontal type mold clamping unit in which the mold opening-closing direction is the horizontal direction. For example, the horizontal type mold clamping unit includes a stationary platen, a movable platen, a toggle support, a toggle mechanism, tie bars, a mold clamping motor, or the like. A stationary mold is attached to the stationary platen, and a movable mold is attached to the movable platen. A mold unit is configured of the stationary mold and the movable mold. The toggle support is disposed on the side opposite to the stationary platen based on the movable platen. The tie bars are parallel to each other in the horizontal direction, and connect the stationary platen and the toggle support. The toggle mechanism is disposed between the movable platen and the toggle support, and moves the movable platen with respect to the toggle support. The movement conversion mechanism which converts the rotational motion of the mold clamping motor to the linear motion of the crosshead is disposed between the crosshead of the toggle mechanism and the mold clamping motor.

### Brief Description of the Reference Symbols

- 10:: mold clamping unit
- 12:: upper platen
- 13:: lower platen
- 15:: toggle support
- 16:: tie bar
- 20:: toggle mechanism
- 21:: mold clamping motor
- 22:: movement conversion mechanism
- 30:: mold unit
- 32:: upper mold
- 33:: lower mold
- 40:: injection unit
- 51:: control panel
- 52:: support member

## Claims

1. An injection molding machine, comprising:
an operation panel including a display device;
a control panel (51) which is provided so as to be separated from the operation panel and is used in a control of injection molding based on setting input by the operation panel, the control panel including a housing accommodating electric devices comprising a processing device;
a peripheral member which is provided in the periphery of the control panel (51);
a support member (52) which supports the control panel (51) to be movable by pivoting, by a linear movement, and/or by a curved movement between a close position at which the control panel (51) closes a path reaching the peripheral member when an operation with respect to the peripheral member is performed and an open position at which the control panel (51) opens the path;
a frame (Fr) which supports at least one of a mold clamping unit (10) and an injection unit (40),
wherein the control panel (51) is accommodated inside a room formed by the frame (Fr) along with the peripheral member when the control panel (51) is positioned at the close position.

2. The injection molding machine according to claim 1, further comprising:
the frame (Fr) which supports a mold clamping unit (10),
wherein the peripheral member is a component of the mold clamping unit.

## Patentansprüche

1. Spritzgießmaschine, umfassend:
ein Bedienungspanel, das eine Anzeigevorrichtung enthält;
ein Steuerpanel (51), das derart vorgesehen ist, dass es von dem Bedienungspanel getrennt ist, und bei einer Steuerung des Spritzgießens basierend auf einer durch das Bedienungspanel eingegebenen Einstellung verwendet wird, wobei das Steuerpanel ein Gehäuse enthält, das elektrische Vorrichtungen aufnimmt, die eine Verarbeitungsvorrichtung umfassen;
ein Peripherieelement, das in der Peripherie des Steuerpanels (51) vorgesehen ist;
ein Trägerelement (52), das das Steuerpanel (51) derart trägt, dass es durch Schwenken, durch eine geradlinige Bewegung und/oder durch eine gekrümmte Bewegung zwischen einer Verschließposition, an der das Steuerpanel (51) einen Weg verschließt, der zum Peripherieelement führt, wenn ein Vorgang in Bezug auf das Peripherieelement durchgeführt wird, und einer Öffnungsposition, an der das Steuerpanel (51) den Weg öffnet, beweglich ist;
einen Rahmen (Fr), der wenigstens eine Formschließeinheit (10) und/oder eine Einspritzeinheit (40) trägt,
wobei das Steuerpanel (51) im Inneren eines Raums, der durch den Rahmen (Fr) zusammen mit dem Peripherieelement gebildet wird, aufgenommen ist, wenn das Steuerpanel (51) an der Verschließposition angeordnet ist.

2. Spritzgießmaschine nach Anspruch 1, weiter umfassend:
den Rahmen (Fr), der eine Formschließeinheit (10) trägt,
wobei das Peripherieelement eine Komponente der Formschließeinheit ist.

## Revendications

1. Une machine de moulage par injection, comprenant :
un panneau opérationnel incluant un dispositif d'affichage ;
un panneau de commande (51) qui est disposé de façon à être séparé du panneau opérationnel et qui est utilisé dans une commande de moulage par injection sur la base d'un réglage entré par le panneau opérationnel, le panneau de commande incluant un boitier logeant des dispositifs électriques comprenant un dispositif de traitement ;
un élément périphérique qui est disposé à la périphérie du panneau de commande (51) ;
un élément de support (52) qui supporte le panneau de commande (51) de sorte qu'il peut être déplacé par pivotement, par un mouvement linéaire et/ou par un mouvement incurvé, entre une position fermée dans laquelle le panneau de commande (51) ferme un passage atteignant l'élément périphérique quand une opération par rapport à l'élément périphérique est effectuée, et une position ouverte dans laquelle le panneau de commande (51) ouvre le passage ;
un cadre (Fr) qui supporte au moins une unité parmi une unité de serrage de moule (10) et une unité d'injection (40),
dans laquelle le panneau de commande (51) est logé à l'intérieur d'une chambre formée par le cadre (Fr) avec l'élément périphérique quand le panneau de commande (51) est positionné dans la position fermée.

2. La machine de moulage par injection selon la revendication 1, comprenant également :
le cadre (Fr) qui supporte une unité de serrage de moule (10),
dans laquelle l'élément périphérique est un composant de l'unité de serrage de moule.
